# EUROPEAN PATENT SPECIFICATION

(11) **EP 3 976 894 B1**
(45) Date of publication and mention of the grant of the patent: **18.03.2026**
(21) Application number: 20813168.0
(22) Date of filing: 29.05.2020
(51) Int. Cl.: E02F 9/28, E02F 9/26, E02F 5/14

(54) **GROUND ENGAGING TOOL MONITORING SYSTEM**
ÜBERWACHUNGSSYSTEM FÜR EIN BODENEINGRIFFSWERKZEUG
SYSTÈME DE SURVEILLANCE D'OUTIL D'ENTRÉE EN CONTACT AVEC LE SOL

(30) Priority: 31.05.2019 AU 2019901878
(43) Date of publication of application: 06.04.2022
(73) Proprietor: CQMS Pty Ltd, Murarrie Queensland 4172 (AU)
(72) Inventor: HILLIER, Nick, Murarrie, Queensland 4172 (AU); SHRESTHA, Sagun Man Singh, Murarrie, Queensland 4172 (AU); BATTEN, Ross, Murarrie, Queensland 4172 (AU); JUNG, Myoungki, Murarrie, Queensland 4172 (AU)
(74) Representative: Ipsilon
(86) International application number: PCT/AU2020/050550
(87) International publication number: WO 2020/237324

(56) References cited:
- WO-A1-2017/213784
- WO-A1-2018/009955
- WO-A1-2018/009955
- WO-A1-2018/136889
- CN-A- 106 592 679
- US-A1- 2013 035 874
- US-A1- 2013 035 874
- US-A1- 2016 237 640
- US-A1- 2016 326 723
- US-A1- 2017 236 261

## Description

### FIELD OF THE INVENTION

The invention relates to a wear member monitoring system and method of monitoring wear members. In particular, the invention relates, but is not limited, to a wear member monitoring system and method for monitoring wear and/or presence (or lack thereof) of one or more ground engaging tools such as an excavator tooth, adapter, or shroud.

### BACKGROUND TO THE INVENTION

Reference to background art herein is not to be construed as an admission that such art constitutes common general knowledge.

Many activities involve wear members, typically sacrificial replaceable components designed to wear in order to protect something. One notable area involve wear members is in the mining industry, where excavation buckets, and the like, have wear members mounted at areas of high wear, such as the digging edge, in order to protect the bucket itself. Such wear members often include excavator tooth assemblies and lip shrouds.

Excavator tooth assemblies mounted to the digging edge of excavator buckets, and the like, generally comprise a replaceable digging tooth, an adaptor body and an adaptor nose which is secured by welding, or the like, to the digging edge of a bucket or the like. Replaceable lip shrouds are typically located between the excavator tooth assemblies to protect the bucket edge. The tooth generally has a socket-like recess at its rear end to receivably locate a front spigot portion of the adaptor nose and a locking system is generally employed to releasably secure the tooth on the adaptor.

In use, such wear members are subjected to significant wear and extensive forces. As the various components wear, the locking system can loosen thereby increasing the risk of loss of a digging point or an entire adaptor/tooth combination. This necessitates considerable downtime to replace the lost wear members and where components are not recovered, these can cause damage and/or significant downtime in downstream operations, particularly if the detachment goes unnoticed. By way of example, if a wear member becomes detached from an excavator bucket, the wear member may damage other equipment on a mining site when it is inadvertently processed by, for instance, a rock crusher. Furthermore, digging with detached or heavily worn wear members is inherently less effective.

In an attempt to avoid unexpected detachment of wear members, preventative maintenance schedules are employed on worksites. Other technologies have also been proposed for monitoring and reporting the loss of wear members. However, these technologies are typically complex and are not suited to all conditions experienced on, for example, a mining site.

One such system for monitoring wear and/or loss of wear members is described in PCT publication no. WO 2018/009955A1. Whilst effective, particularly in controlled environments, it has been found that during long term use the ground engaging tool loss detection suffered as the ground engaging tool wore down. Furthermore, the system was heavily constrained by sensor resolution and, in any event, was focused on monitoring teeth so was not able to effectively monitor other wear members such as shrouds. Other solutions are described in documents US 2016/237640 A1 and US 2013/035874 A1.

### OBJECT OF THE INVENTION

It is an aim of this invention to provide a wear member monitoring system and method of use which overcomes or ameliorates one or more of the disadvantages or problems described above, or which at least provides a useful alternative.

Other preferred objects of the present invention may become apparent from the following description.

### SUMMARY OF INVENTION

The present invention is directed to a monitoring system for a tool of working equipment, as defined by the appended claims. Embodiments and examples in the following description which are not deemed covered by the appended claims are considered as being not part of the present invention and are merely provided for the purpose of understanding. A monitoring system for a tool of working equipment includes:
one or more sensors mounted on the working equipment and directed towards the tool; and
a processor configured to:
   receive data relating to the tool from the one or more sensors;
   generate a three dimensional representation of at least a portion of the tool using the received data;
   compare the generated three dimensional representation with a previously generated three dimensional representation;
   identify one or more of wear and loss of at least a portion of the tool using the comparison of the generated three dimensional representation with the previously generated three dimensional representation; and
   when wear or loss of at least a portion of the tool is identified, output an indication of that wear or loss.

Preferably, the tool has wear parts. Preferably the wear parts are replaceable. Preferably the tool is a ground engaging tool.

The one or more sensors may comprise at least one sensor able to obtain data representative of a three dimensional surface shape of the ground engaging tool. The one or more sensors may comprise a time of flight sensor. The one or more sensors may comprise a range finder sensor. The one or more sensors may comprise a laser range finder sensor.
The one or more sensors may comprise a laser range finder sensor. The one or more sensors may comprise a Laser Imaging, Detection, and Ranging (LIDAR) sensor. The LIDAR sensor may be a three dimensional LIDAR sensor. The one or more sensors may comprise a multi-layered, time of flight, scanning laser range finder sensor.

The one or more sensors may comprise stereo vision sensors. The stereo vision sensors may output data in various spectra including the visual spectrum and/or infrared thermal spectrum. The one or more sensors may comprise non-time of flight ranging systems. The non-time of flight ranging systems may comprise structured lighting based three dimensional ranging systems. The one or more sensors may comprise radar. The one or more sensors may comprise ultrasonic sensors. The one or more sensors may comprise sensors configured to detect a radiation pattern. The radiation pattern may be produced and/or modified by the ground engaging tool. The one or more sensors may comprise Magnetic Resonance Imaging (MRI). The one or more sensors may comprise acoustic sensors. The one or more sensors may comprise a two dimensional sensor whereby the three dimensional representation is inferred from two dimensional sensor data. The three dimensional representation may be inferred from two dimensional sensor data based on lighting analysis and/or machine learning.

The one or more sensors may comprise a single sensor capable of measuring, and outputting data representative of, a three dimensional surface shape of at least a portion of the ground engaging tool. Alternatively, the one or more sensors may comprise a plurality of sensors. The plurality of sensors may comprise optical imaging sensors such as cameras. The plurality of sensors may comprise at least a pair of two dimensional scanning range finders oriented to measure at different angles. The two dimensional scanning range finders may comprise laser range finders. The two dimensional scanning range finders may be oriented to measure at approximately 90° to each other. The generation of a three dimensional representation of at least a portion of the ground engaging tool using data received from the one or more sensors may comprise the processor being configured to assemble a plurality of two dimensional scans taken over a time period to generate the three dimensional representation. The processor may be configured to assemble a plurality of two dimensional scans taken over a time period to generate the three dimensional representation using motion estimate data.

The processor may be configured to combine data from sensors with different sensing modalities, fidelity and/or noise characteristics to generate the three dimensional representation. The combining of data from sensors may comprise using a combinatorial algorithm. For example, lidar and radar data may be combined via a combinatorial algorithm such as a Kalman filter.

The one or more sensors may be mounted on the working equipment such that they have line of sight of the ground engaging tool. The one or more sensors may be located on the tool itself, with line of sight of a portion of interest of the tool. The line of sight may be continuous when the working equipment is in use. Alternatively, the line of sight may be periodic when the working equipment is in use. The one or more sensors may be mounted on movable members of the working equipment. The one or more sensors may be mounted on a movable arm of the working equipment. The working equipment may be an excavator. The one or more sensors may be mounted on a stick of the excavator. The one or more sensors may be mounted on a boom of the excavator. The one or more sensors may be mounted on a house or cabin of the excavator. The one or more sensors may be mounted on a bucket of the excavator.

The processor may be configured to generate a three dimensional representation of at least a portion of the ground engaging tool by combining the received data from the one or more sensors with a motion estimate. The motion estimate may be derived from the sensor data. The motion estimate may be derived from the sensor data as the ground engaging tool moves through a field of view of the sensor.

The processor may be further configured to pre-process the received data prior to generating a three dimensional representation. The processor may be configured to pre-process the received data by identifying data within a predetermined range. The pre-processing may comprise range-gating. The pre-processing may comprise interlacing multiple sensor scans. The interlacing of multiple sensor scans may result in a wider effective field of view.

The pre-processing may comprise estimating when the ground engaging tool is sufficiently within a field of view of the one or more sensors. The estimating may comprise identifying whether the sensor data indicates that, at selected points, the ground engaging tool is identified as being present or absent. The estimating may comprise determining a ratio of points where the ground engaging tool is expected to be present to points where the ground engaging tool is expected to be absent. The estimating may comprise comparing the ratio to a predetermined threshold value. The predetermined threshold value may be based upon known geometry of the ground engaging tool. The estimating may alternatively be based on a state-machine. The state machine may comprise one or more of the following states: wear members not visible, wear members partially visible, wear members fully visible, wear members partially beyond the field of view of the sensors, and wear members fully outside the field of view of the sensor. State detection may be based on heuristics that identify conditions for spatial distribution of the three dimensional points corresponding to each state. The estimating may also be supplemented by a rejection mechanism that rejects data indicating that wear members may still be engaged in a dig face or obscured by material that is not of interest. The rejection mechanism may check for empty data around known tool dimensions. The rejection mechanism may check for approximate shape (e.g. planar, spherical, ellipsoidal) of the tool via examination of the results of a principal components analysis of three dimensional points.

The processor may be configured to generate a three dimensional representation by combining multiple sets of sensor data, taken at different times, into a single three dimensional model. The combining may comprise combining sensor data over a period of time starting from when it is estimated that the ground engaging tool is sufficiently within a field of view of the one or more sensors. The combining may comprise voxelisation of the sensor data. Points from separate sets of data referring to a single voxel may be merged into a single point. The points from separate sets of data referring to a single voxel may be merged into a single point using a statistical model. The points from separate sets of data referring to a single voxel may be merged into a single point representing a median.

The processor may be configured to generate a three dimensional representation by combining multiple sets of sensor data, taken at different times, into a single two dimensional model such as a range-image. The combining may comprise combining sensor data over a period of time starting from when it is estimated that the ground engaging tool is sufficiently within a field of view of the one or more sensors. The combining may comprise projecting three dimensional data onto a planar, cylindrical, spherical, or other continuous surface to form a 2D gridded representation. The points from separate sets of data referring to a single pixel may be merged using a statistical model. The statistical model may comprise a cumulative mean and/or a Kalman filter. The Kalman filter may be univariate.

The processor may be configured to generate a three dimensional representation by aligning multiple three dimensional models. Aligning may comprise co-locating various three dimensional models in a common frame of reference. Aligning may comprise using a selected model as a reference and aligning other three dimensional models to that selected model. Aligning generated models may comprise using an Iterative Closest Point (ICP) or Normal Distributions Transform (NDT) process. The alignment process may have constraints such as, for example, expected degrees or freedom. Aligning may comprise determining a homographical transformation matrix. The homographical transformation matrix may be based on matching key points, geometrical features or axes between a reference model and intermediate models. Determination of axes for transformation may be based on Principal Component Analysis (PCA).

The processor may be further configured to convert the generated three dimensional representation to two dimensional range data. The two dimensional range data may be an image. Generated three dimensional representation may be converted to a two dimensional image by selecting a plane of the three dimensional representation and indicating range data orthogonal to the plane with different image characteristics. The different image characteristics may comprise different colours or intensities. Range data orthogonal to the selected plane may be indicated using a colour gradient mapped to the orthogonal axis. The two dimensional image may be filtered using, for example, an opening-closing or dilate-erode filter. Multiple two dimensional images over a time period may be combined to reduce noise.

The processor may be further configured to compare the generated three dimensional representation with a previously generated three dimensional representation by comparing two dimensional images that include range data. The two dimensional images may be compared over varying time-bases. The two dimensional images may be compared by image subtraction. The varying time-bases may comprise a first time base that is shorter than a second time base. The second time base may be at least twice as long as the first time base. The second time base may be an order of magnitude longer than the first time base. The first time base may be less than one hour. The second time base may be greater than 12 hours.

The processor may be further configured to identify one or more of wear and loss of at least a portion of the ground engaging tool by analysing the comparison of two dimensional images. Significant differences in an image comparison with the first time base may be indicative of loss of at least a portion of the ground engaging tool. Smaller differences in a comparison with the second time base may be indicative of wear of at least a portion of the ground engaging tool.

The analysing may comprise creating a difference image. The difference image may be divided into separate regions. The regions may correspond to areas of interest of the ground engaging tool. The areas of interest may comprise expected locations of wear members of the ground engaging tool. The wear members may comprise one or more of teeth, adapters, shrouds and liners. The difference image may be divided into separate regions based upon a predetermined geometric model of the ground engaging tool. The difference image may be divided into separate regions using edge-detection analysis. The edge-detection analysis may be utilised to identify substantially vertical line features. The difference image may be divided into separate vertical regions.

The analysing may comprise measuring changes in the difference image in each region. Measuring changes in the difference image in each region may comprise quantifying pixels. Quantifying pixels may comprise counting contiguous pixels. The number of contiguous pixels may indicate areas of wear and/or loss in that region. The contiguous pixels may be counted in lines. The number of pixels counted in a line may be compared against a threshold to indicate whether wear and/or loss may have occurred. The threshold may be predetermined. The threshold may be adaptive such as, for example, comparing the value over time or via machine learning. The machine learning may be guided by operator feedback. The analysing may comprise using a convolution process. The convolution process may comprise using a convolution filter. The convolution filter may produce location and magnitude of changes where differences are not due to loss, for example a change in depth only. Noise rejection may also be performed by using an image mask derived from the image made at an earlier time base and applied to the current image. This mask would be to prevent analysis of portions of the image that are deemed irrelevant.

The processor may be configured to output an indication of identified wear or loss to an operator of the working equipment. The output may comprise an alert. The alert may comprise one or more of an audible alert, a visual alert, and a haptic alert. The alert may be provided to an operator of the working equipment. The alert may also, or instead, be transmitted remotely. Preferably the alert is transmitted remotely to a secondary location not on the equipment. The alert may comprise a first alert to indicate wear and a second alert, different to the first alert, to indicate loss. The indication of wear or loss may be utilised by control systems of the working equipment to adapt operation.

The system may further comprise a vehicle identification system. The vehicle identification system may include one or more sensors to establish vehicle identification. The vehicle identification system may utilise the processor to undertake a vehicle identification operation. The vehicle identification system may allow identification of an associated vehicle when loss of a portion of the ground engaging tool, such as a wear member, is identified. The vehicle identification system may assist in determining an associated vehicle a detached wear member, or the like, may have been delivered to during a delivery operation of the working equipment.

The processor may be further configured to record and/or transmit global navigation satellite system (GNSS) co-ordinates when loss of at least a portion of the tool is identified. The GNSS may comprise GPS.

The processor is preferably located on the working equipment. The processor may, however, be located remotely. The processor may comprise one or more network connected servers. The working equipment may comprise a processor for local processing and also be in communication with one or more network connected processors for remote processing.

In another form, A method of monitoring one or more wear members of a tool of working equipment, comprises:
receiving data relating to the tool from one or more sensors mounted on the working equipment;
generating a three dimensional representation of at least a portion of the tool using the data received from the one or more sensors;
comparing the generated three dimensional representation with a previously generated three dimensional representation;
identifying one or more of wear and loss of at least a portion of the tool based on an outcome of the comparing step;
outputting an indication of wear or loss of at least a portion of the tool upon the step of identifying one or more of wear and loss of at least a portion of the ground engaging tool identifying such wear or loss.

Preferably the one or more wear members are replaceable. Preferably the tool is a ground engaging tool.

The step of receiving data relating to the ground engaging tool from one or more sensors may comprise receiving three dimensional data relating to at least a portion of the ground engaging tool. The step of receiving data may comprise receiving data from a single sensor. Alternatively, the step of receiving data may comprise receiving information from a plurality of sensors. The method may further comprise the step of converting data from a plurality of sensors into three dimensional data.

The step of generating a three dimensional representation of at least a portion of the ground engaging tool may comprise combining data received from the one or more sensors with a motion estimate. The method may further comprise deriving the motion estimate from the sensor data, preferably from data as the ground engaging tool moves through a field of view of the sensor.

The method may further comprise pre-processing received sensor data prior to the step of generating a three dimensional representation. The method may further comprise the step of pre-processing received sensor data by identifying sensor data within a predetermined range, preferably by range-gating. The step of pre-processing may comprise interlacing multiple sensor scans. The step of interlacing of multiple sensor scans may provide a wider effective field of view of the sensor data.

The method may further comprise the step of estimating when the ground engaging tool is sufficiently within a field of view of the one or more sensors. The step of estimating may comprise identifying whether the sensor data indicates that, at selected points, the ground engaging tool is identified as being present or absent. The step of estimating may comprise determining a ratio of points where the ground engaging tool is expected to be present to points where the ground engaging tool is expected to be absent. The step of estimating may comprise comparing the ratio to a predetermined threshold value. The predetermined threshold value may be based upon known geometry of the ground engaging tool.

The method may further comprise the step of combining multiple sets of sensor data, taken at different times, into a single three dimensional model. The step of combining may comprise combining sensor data over a period of time starting from when it is estimated that the ground engaging tool is sufficiently within a field of view of the one or more sensors. The step of combining may comprise voxelisation of the sensor data. The method may further comprise the step of merging separate sets of data referring to a single voxel into a single point. Points from separate sets of data referring to a single voxel may be merged into a single point using a statistical model. The points from separate sets of data referring to a single voxel may be merged into a single point representing a median.

The method may further comprise the step of aligning multiple three dimensional models. The step of aligning may comprise co-locating various three dimensional models in a common frame of reference. The step of aligning may comprise using a selected model as a reference and aligning other three dimensional models to that selected model. The step of aligning generated models may comprise using an Iterative Closest Point (ICP) or Normal Distributions Transform (NDT) process. The ICP process may have constraints such as, for example, to expected degrees or freedom. The step of aligning may comprise determining a homographical transformation matrix. The homographical transformation matrix may be based on matching key points between a reference model and intermediate models.

The method may further comprise converting generated three dimensional representation to two dimensional range data. The step of converting to a two dimensional range data may comprise creating an image. The step of converting may comprise selecting a plane of the three dimensional representation and indicating range data orthogonal to the plane with different image characteristics. The different image characteristics may comprise different colours. Range data orthogonal to the selected plane may be indicated using a colour gradient mapped to the orthogonal axis. The method may further comprise filtering the two dimensional image. The step of filtering may comprise applying one or more of an opening-closing or dilate-erode filter. The filtering may comprise reducing noise by combining multiple two dimensional images over a time period.

The step of comparing a generated three dimensional representation with a previously generated three dimensional representation may comprise comparing two dimensional images that including range data. The step of comparing may comprise comparing the two dimensional images over varying time-bases. The step of comparing may comprise subtracting one image from another image. The varying time-bases may comprise a first time base that is shorter than a second time base. The method may further comprise the step of analysing a comparison of two dimensional images.

The method may further comprise the step of creating a difference image. The method may further comprise the step of dividing the difference image into separate regions. The regions may correspond to areas of interest of the ground engaging tool. The areas of interest may comprise expected locations of wear members of the ground engaging tool. The wear members may comprise one or more of teeth, adapters, shrouds and liners. The difference image may be divided into separate regions based upon a predetermined geometric model of the ground engaging tool. The step of dividing the difference image into separate regions may comprise using edge-detection analysis. The edge-detection analysis may be utilised to identify substantially vertical line features. The difference image may be divided into separate vertical regions.

The step of comparing may further comprise the step of measuring changes in a difference image in each divided region. Measuring changes in the difference image in each region may comprise the step of quantifying pixels. The step of quantifying pixels may comprise counting contiguous pixels. The number of contiguous pixels may indicate areas of wear and/or loss in that region. The step of counting contiguous pixels may comprise counting the pixels in lines. The number of pixels counted in a line may be compared against a threshold to indicate whether wear and/or loss may have occurred. The threshold may be predetermined. The threshold may be adaptive such as, for example, comparing the value over time or via machine learning. The machine learning may be guided by operator feedback.

The step of outputting an indication of wear or loss may comprise outputting the indication to an operator of the working equipment. The step of outputting may comprise issuing an alert. The alert may comprise one or more of an audible alert, a visual alert, and a haptic alert. The alert may be provided to an operator of the working equipment. The step of outputting may comprise transmitting an indication of loss and/or wear and/or an alert remotely. The alert may comprise a first alert to indicate wear and a second alert, different to the first alert, to indicate loss. The method may further comprise the step of using the indication of wear or loss in control systems of the working equipment to adapt operation.

The method may further comprise the step of identifying an associated vehicle. The method may further comprise identifying an associated vehicle when a loss event is indicated. The method may further comprise determining an associated vehicle a detached wear member, or the like, may have been delivered to during a delivery operation of the working equipment.

The method may further comprise the step of transmitting the received data relating tool from one or more sensors mounted on the working equipment to a server. The server may perform the generating, comparing, identifying, and/or outputting steps. The method may further comprise receiving data from the server indicative wear or loss of at least a portion of the tool.

In another form, there is provided a wear member monitoring system for a tool, preferably a ground engaging tool, of working equipment, the system including:
one or more sensors mounted on the working equipment having the tool in a sensing field of view; and
a processor configured to carry out a method of monitoring one or more wear members of a tool of working equipment as hereinbefore described.

A ground working equipment, such as an excavator, comprises:
a ground engaging tool;
one or more wear members located on the ground engaging tool;
one or more sensors directed towards the one or more wear members of the ground engaging tool;
a processor in communication with the one or more sensors, the processor being configured to:
   receive data from the one or more sensors;
   generate a three dimensional representation of at least a portion of the wear members using data received from the one or more sensors;
   compare the generated three dimensional representation with a previously generated three dimensional representation;
   identify one or more of wear and loss of the one or more wear members using the comparison of the generated three dimensional representation with the previously generated three dimensional representation; and
   when wear or loss of one or more wear members is identified, outputting an indication of that wear or loss.

The excavator may comprise various forms of earth working and moving equipment including, for example, crawler excavators, wheel loaders, hydraulic shovels, electric rope shovels, dragline buckets, backhoes, underground boggers, bucket wheel reclaimers, and the like.

Further features and advantages of the present invention will become apparent from the following detailed description.

### BRIEF DESCRIPTION OF THE DRAWINGS

By way of example only, preferred embodiments of the invention will be described more fully hereinafter with reference to the accompanying figures, wherein:
Figure 1 illustrates a wear member monitoring system for a ground engaging tool;
Figure 2 illustrates example sensor data of a ground engaging tool;
Figure 3 illustrates an example three dimensional representation of a ground engaging tool generated from sensor data;
Figure 4 illustrates a visual representation of an example comparison of a three dimensional representation of a ground engaging tool with a previously generated three dimensional representation;
Figure 5 illustrates a thermal image of the ground engaging tool of figure 4; and
Figure 6 illustrates a diagrammatic representation of an example a wear member monitoring system.

### DETAILED DESCRIPTION OF THE DRAWINGS

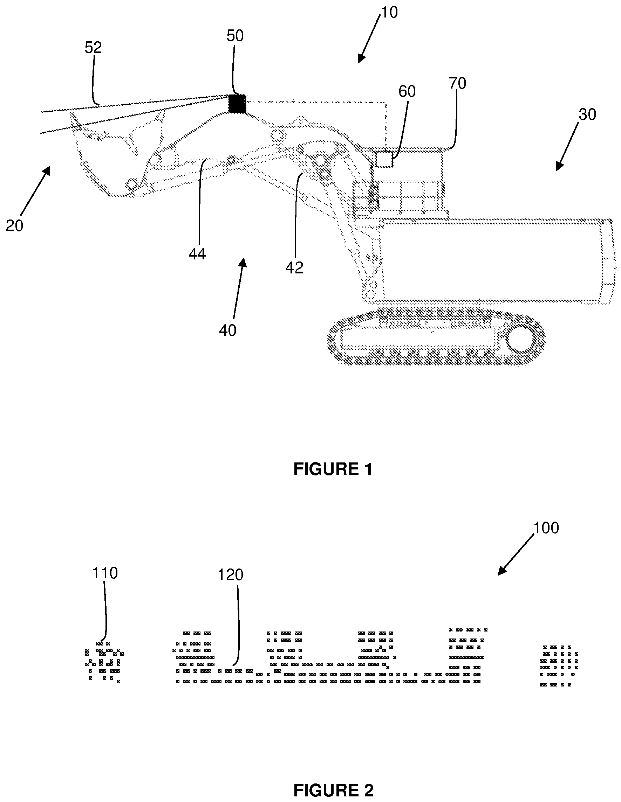

Figure 1 illustrates a tool monitoring system 10 for a ground engaging tool 20 of working equipment in the form of an excavator 30. It should be appreciated that the invention could apply to other types of vehicles or working equipment. The illustrated excavator 30 is a crawler type excavator 30. However, it should be appreciated that the excavator 30 may be other types of excavators having a ground engaging tool 20 including, for example, wheel loaders, hydraulic shovels, electric rope shovels, dragline buckets, backhoes, underground boggers, bucket wheel reclaimers, and the like. Although the illustrated tool is a ground engaging tool 20, it should also be appreciated that the invention could apply to other types of tools, particularly those with replaceable wear parts, such as construction tools, manufacturing tools, processing tools, or the like.

The excavator 30 of figure 1 has a movable arm 40 including a boom 42 and stick 44. One or more sensors 50 are mounted on the movable arm 40, more particularly on the stick 44 of the movable arm having at least a portion of the ground engaging tool 20 in their field of view 52. Depending on angles of articulation of the movable arm the ground engaging tool 20 may not always be within a field of view 52 of the sensor 50, but preferably the sensors are positioned and directed towards the ground engaging tool 20 in such a manner that the ground engaging tool 20 moves through their field of view 52 during usual working operations such as, for example, during a dumping operation.

The sensor 50 are in communication with a processor 60, which is preferably located on the excavator 30, even more preferably in the cab 70 of the excavator. The processor 60 could, however, also be located remotely, with data from the sensor 50 being transmitted off vehicle to a remote location. The processor 60 could, also, be located on the excavator 30 with processed information, such as findings or alerts, being transmitted to a remote location for remote monitoring and assessment.

The sensor 50 is preferably configured to collect data representing a three dimensional model of the current state of the ground engaging tool 20 such as, for example, a point cloud, probability cloud, surface model or the like. In a preferred embodiment, the sensor 50 is a multi-layered, time-of-flight, scanning laser range finder sensor (such as, for example, a SICK LD MRS-8000 sensor). It should be appreciated, however, that alternate sensors that could be used include, but are not limited to, stereo vision systems (both in the visual spectrum or any other spectrum, such as infrared thermal cameras), structured lighting based three dimensional ranging systems (not time of flight), radar, ultrasonic sensors, and those that may infer structure based on passive or indirect means, such as detecting a radiation pattern produced or modified by the ground engaging tool 20 (e.g. MRI or passive acoustic analysis).

In preferred forms the sensor 50 is a single three dimensional sensor but it should also be appreciated that one or more non-three dimensional sensors could be employed such as, for example, one or more two dimensional sensors or three dimensional sensors with a limited field of view that create a complete three dimensional model over a short time interval. Examples of such configurations include, but are not limited to a monocular structure from motion based sensing systems, including solutions based on event cameras, or a pair of two dimensional scanning laser range finders oriented at angles (preferably approximately 90°) to each other so that one sensor obtains a motion estimate by tracking of the ground engaging tool whilst the other collects time-varying two dimensional scans of the ground engaging tool that are then assembled into a three dimensional model via the motion estimate data.

The entire area of interest of a ground engaging tool 20 may not be captured by a single scan or frame of the sensor 50, but sensor data may be combined with motion estimates derived from the sensor data as the ground engaging tool 20 moves through the field of view 52 of the sensor 50 to generate the three dimensional model.

Depending on the sensor 50 location, there will likely be an expected variation of distance ranging data that can be considered acceptable, with data closer to, or further away from the sensor 50 than this able to be safely discarded. This data may be from dust, dirt, a dig-face or other items that are not relevant portions of the ground engaging tool 20. The processor 60 may, therefore, pre-process received sensor by range-gating which can significantly reduce the amount of data requiring comprehensive processing.

Other sensor specific pre-processing steps may also be performed. For example, for a SICK LDMRS-8000 sensor 50 multiple scans can be interlaced to present data with a wider vertical field of view for analysis. Similarly, noise rejection based on point clustering can be undertaken for this specific sensor. Other pre-processing steps may be utilised depending on the type, and in some cases even brand, of the sensor 50 being employed.

If relevant portions of the ground engaging tool 20 to be monitored by the system 10 are not continuously visible, then a determination of when to start and stop collecting data from the sensor 50 for analysis by the processor 60 should be made. The start point of relevant data collection may be referred to as a 'trigger' point or event. The trigger point may be identified by examining each frame or scan of sensor data and determining the ratio of points that are in a location where the ground engaging tool 20 is expected to be present to those where the ground engaging tool 20 is expected to be absent. This ratio may be compared against a pre-determined threshold value, preferably based on known geometry of the ground engaging tool 20 or a state machine.

For example, in an application where a bucket of a shovel is being considered, a measurement across the ground engaging tool 20 from one side of the bucket to the other could be used to very simply split the sensor data into areas where a lot of data is expected (e.g. where there are wear members in the form of teeth are located) and areas where less data is expected (e.g. where wear members in the form of shrouds are located). The ratio of these points could be determined through a relatively simple division operation, or through a more complex routine such as, for example, a Fuzzy-Logic 'AND' logic operation via an algebraic product. This value can then be compared against a threshold value where the number of teeth are compared to the number of shrouds and the expected field of view of the sensor in a frame where the ground engaging tool 20 is visible to obtain a ratio for comparison.

A state machine, on the other hand, may be comprised of the following states: wear members not visible, wear members partially visible, members fully visible, wear members partially beyond the field of view of the sensors, and/or wear members fully outside the field of view of the sensor. State detection may be based on heuristics that identify the conditions for spatial distribution of three dimensional points corresponding to each state. The estimating may also be supplemented by a rejection mechanism that rejects data indicating that the wear members may still be obstructed such as by being engaged in a dig face or obscured by material that is identified to not be of interest. This rejection mechanism may check for empty data around the known tool dimensions. The rejection mechanism may also check for the approximate shape (for example, planar, spherical, ellipsoidal) of the tool via examination of the results of a principal components analysis of three dimensional points.

Figure 2 illustrates example sensor 50 data 100 from a single scanning laser range finder scan frame of a ground engaging tool 20 portion of a shovel (not shown) once the trigger point has been reached. The data 100 includes clearly identifiable wear members in the form of teeth 110 and shrouds 120. Although not readily apparent from figure 2, each point contains range information, relative to the sensor 50, such that there is sufficient data to generate a three dimensional representation of the ground engaging tool 20.

To improve reliability, a buffer (preferably circular) of sensor data prior to determination of the trigger point is stored and subsequent analysis may be performed on scans in the buffer, unless a particular scan is discarded for lacking integrity (e.g. insufficient data points, inability to track key features used for three dimensional model creation, etc.).

Whilst not essential, multiple sets of sensor 50 data are preferably combined over relatively short time intervals to create a more effective three dimensional representation of the ground engaging tool 20. For most sensor 50 locations, sensing modalities, and applications of this technology, it can be expected that the ground engaging tool 20 is not likely to be visible all the time and that the data from the sensor will be subject to variances in quality due to, for example, signal noise, temporary occlusions (such as, for example, dust or material being excavated) and the current weather conditions (such as, for example, fog or rain). Accordingly, it is desirable to combine multiple sets of data from the sensor 50 over a predetermined time interval to create a better representation of the ground engaging tool 20 than provided by a single set of data. In a preferred implementation sensor data over a single dump motion is used. This is determined by the size of the buffer and trigger event, and the ability of motion tracking processing to retain a motion tracking 'lock' on the ground engaging tool 20. If no new data is received over a predetermined period a processing event may be triggered.

To combine multiple sets of sensor data into a single model, a sensing modality appropriate three dimensional voxelised representation may be used. In a preferred form with a scanning laser range finder, a spherical frame based voxelisation that encodes a ray-tracing like description may be used. Multiple points from different scans that fall into the same voxel are merged into a single point via some appropriate statistical model (such as, for example, the median). The resolution of the model can be determined from the desired fidelity of the wear measurement or loss output and the capabilities of the sensor 50 in use. Alternatively, data may be combined directly to a two dimensional gridded representation, with similar statistical merging of data from multiple scans. A statistical model, such as a cumulative mean, may be employed. The values could also be improved via other statistical models, such as the application of an univariate Kalman filter.

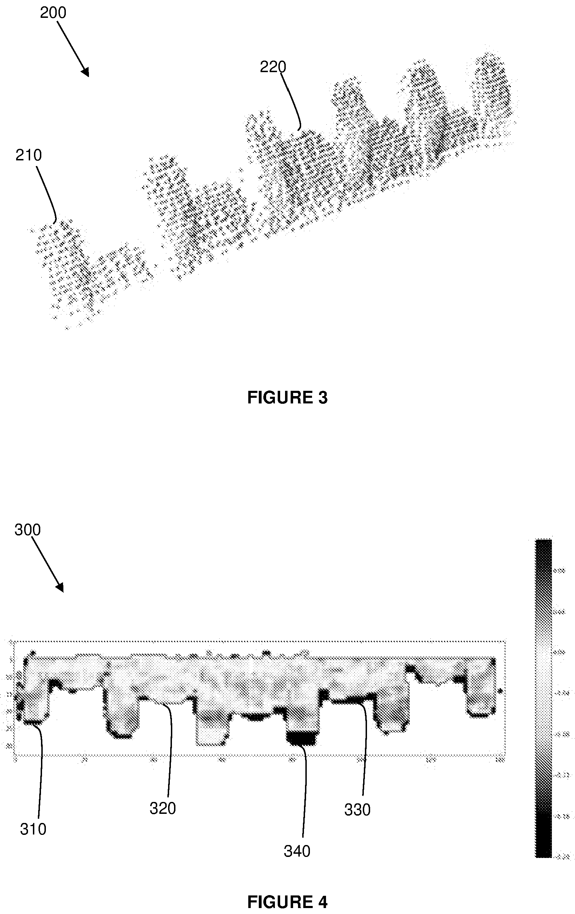

Figure 3 illustrates an example three dimensional representation 200 of a ground engaging tool 20 created by combining multiple sets of three dimensional sensor data measured over a single dump motion in a spherical co-ordinate voxelisation. The representation 200 includes clearly identifiable wear members in the form of teeth 210 and shrouds 220. Once such a three dimensional representation 200 has been generated it may be compared with a previously generated three dimensional representation. The current three dimensional representation 200 is also preferably stored so that it can be used as a previously generated three dimensional representation in future such comparisons.

Over time multiple three dimensional representations of the ground engaging tool 20 are collected during operation. Depending on sensor 50 mounting arrangements, these may be collected in a common frame by virtue of the relative arrangement of the sensor 50 and ground engaging tool 20. Otherwise, they may be in different spatial reference frames or otherwise not readily co-located for comparison. In such cases the collected three dimensional representations 200 of the ground engaging tool 20 models are preferably transformed to be co-located in a single reference frame to ensure the processor 60 can perform an accurate comparison.

A variety of approaches could be used to align multiple three dimensional representations 200 to be co-located in a common frame. A preferred approach is to use a reference three dimensional representation 200 and to align all other three dimensional representations 200 to that reference. This reference three dimensional representation may simply be the first representation generated during or after commissioning or any other representation generated at any stage of the process, providing that it is used in a consistent manner.

Alignment is preferably performed using an Iterative Closest Point (ICP) process. The ICP process preferably has constraints with respect to expected degrees of freedom. For example, a hydraulic face shovel bucket can only translate in two dimensions and rotate about a single axis relative to a sensor 50 mounted on a stick 44. Another example of a suitable alignment algorithm would be the computation of a homographical transformation matrix based on matching keypoints between the reference representation and intermediate representations in a two dimensional image space, supplemented with an appropriate colour normalisation step for range alignment or rotation about the unconstrained axis.

Another example of a suitable alignment algorithm is a Normal Distribution Transform process (NDT). Another example of a suitable alignment algorithm is to perform the alignment in two stages, firstly by application of a gross alignment mechanism, such as rotation as defined by alignment with a pre-determined coordinate system to the point cloud's principal axis as determined by principal component analysis (PCA) together with a translation based on centroids, boundaries, statistical or other geometric features, and secondly by subsequent application of a fine alignment mechanism, such as the application of the ICP or NDT process.

Once aligned (if necessary) the processor 60 compares a recently generated three dimensional representation with at least one previously generated three dimensional representation. The comparison is primarily to detect changes in the ground engaging tool 20 over a predetermined time period. A large change in the three dimensional ground engaging tool 20 representation 200 over a relatively short period of time such as, for example, between dump motions, is indicative of a ground engaging tool 20 loss or breakage event. A smaller change over a longer period of time is indicative of abrasive wear to the ground engaging tool 20.

In a preferred form, the three dimensional representations 200 are converted to a two dimensional range image using image processing techniques such as, for example, superimposing a cartesian frame over the three dimensional model and projecting range measurements from the model onto a pair of the cartesian axes and colouring each pixel by the range value according to the third, orthogonal axis. Further filtering operations, such as opening-closing or dilate-erode, can be applied to the image to fill holes due to occlusions or otherwise generally improve the quality of the image. Combining images over appropriate time periods to further reduce transient noise effects can also be used such as, for example, a moving average of images over a window of a few minutes or removing pixels that are only observed in a small number of images.

The processor 60 then compares images over varying time-bases. By performing an image subtraction operation, for example, differences between images are highlighted. These comparisons can be performed to detect wear and loss events over time periods appropriate to the item of interest. For example, by comparing the current image to the most recent previous image, large changes in the state of the ground engaging tool 20 are highlighted and are indicative of a ground engaging tool 20 loss or breakage event. By comparing an image created over a moderate moving average window such as, for example, a few dump events to a similar image taken the previous day or even earlier, the wear of the ground engaging tool 20 should be evident in both the depth (colour) of the difference image and as a change in the border of the ground engaging tool 20 features in the difference image.

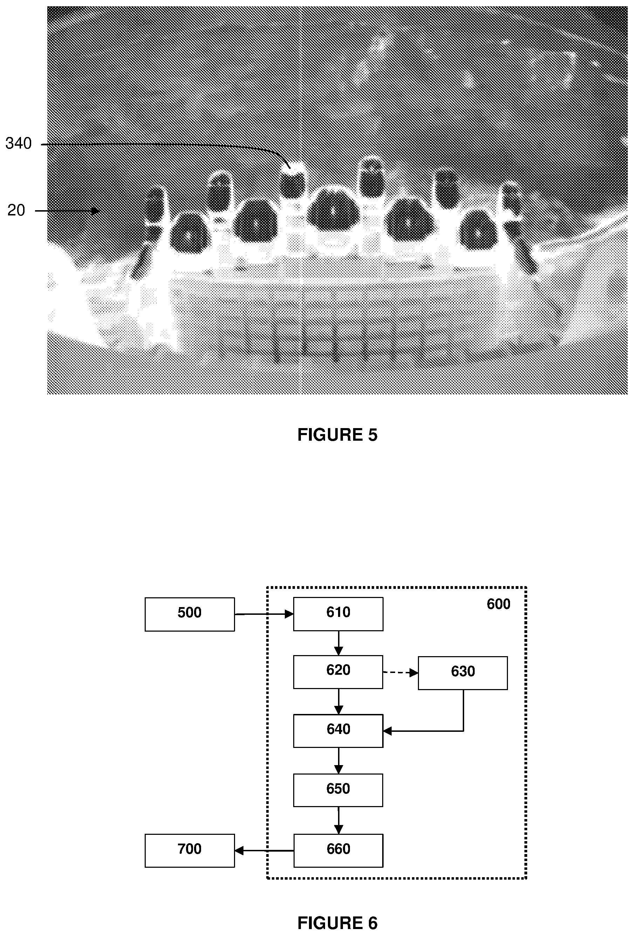

Figure 4 illustrates a visual representation of an example comparison 300 of a three dimensional representation of a ground engaging tool with a previously generated three dimensional representation in two dimensional image format. The representation difference image 300 includes clearly identifiable wear members in the form of teeth 310 and shrouds 320. In this example the time period between representations being compared is relatively long showing both wear in the form of relatively small dark regions 330 around the perimeter of the wear members and tooth tip loss in the form of a relatively larger dark block 340 of one of the teeth 310. Wear in depth is also visible. Figure 5 illustrates a thermal photographic image of the ground engaging tool 20 of figure 4 showing the tooth tip loss 340 highlighted in the difference image 300.

After comparison the processor 60 is configured to identify wear and/or loss of the ground engaging tool 20. The process for such identification may be selected to suit the ground engaging tool 20 being monitored and the type of determinations required. In a preferred form, where the determination is to identify wear and/or loss of at least a portion of the ground engaging tool 20 as illustrated, an image convolution process with an appropriately scaled and weighted kernel may be applied to the difference image. Alternatively, a pixel row counting algorithm may be applied to the difference image.

Application of the convolutional filter to the difference image is performed using a square kernel with linearly increasing weights from the border to the centre. The kernel size is chosen to be about the same size as that of the object that can reasonably expected to be lost, or a little larger, when converted to pixels via scaling and resolution of the difference image. Examination of the magnitude of the result of the convolution operation is used to identify a loss or magnitude of wear and to locate the area of wear or loss. This magnitude is compared against a predetermined threshold or an adaptive threshold. An example predetermined threshold may be based on a fraction of the maximum possible result in the event of a large loss event. This can be tuned by hand to change the sensitivity of the detection. Example adaptive thresholds may be based upon comparing the value over time and looking for changes in value that would indicate a statistical outlier, or a machine learning approach whereby a threshold value is determined via operator feedback regarding the accuracy of detections.

The image used for comparison is preferably divided into vertical regions corresponding to expected locations of teeth and shrouds based on predetermined geometric model of the ground engaging tool 20 which is typically determined by knowledge of its geometry. Such sectioning is preferably performed in an automated manner, for example via the use of an edge-detection algorithm and inspection for substantially vertical line features.

For each vertical region, starting from the edge of the image closest to the tooth tips and iterating row by row towards the base of the teeth, each contiguous line of pixel values in the difference image that indicate an absence in the more recent model by comparison to the earlier model is preferably counted. The number of missing rows for each pixel is compared against either a known threshold value such as, for example, a predetermined threshold or an adaptive threshold.

An example predetermined threshold may be based upon a difference in length between a fully worn ground engaging tool 20 element when mounted on a digging implement, and that of the digging implement or mounting hardware without the ground engaging tool 20 element, converted to pixels via scaling and resolution of the difference image. Example adaptive thresholds may be based upon comparing the value over time and looking for changes in value that would indicate a statistical outlier, or a learning approach whereby a threshold value is determined via operator feedback regarding the accuracy of detections.

Once wear or loss is detected the processor 60 outputs an indication of the wear or loss. This output may take a number of forms, but preferably an alert is linked to the output to provide a notification of the identified wear or loss event. The notification is preferably provided to at least an operator of the working equipment 30.

In addition to simply providing a notification of wear or loss, the processor 60 is preferably able to identify and output an indication of any other useful identified characteristics such as, for example, an identification of abnormal wear occurring (e.g. faster than expected wear of at least a portion of the ground engaging tool 20). This may be performed by comparing pixels or groups of pixels, including moving and overlapping windows of pixels, in difference images constructed over varying time-bases to some predetermined baseline results indicative of acceptable wear rates. The acceptable wear rates may be either for the entire ground engaging tool 20 or for specific portions of the ground engaging tool 20 such as, for example one or more specific wear members.

Further useful notifications may be generated from a multi-variate and spatial correlation with data from other systems. For example, wear rate may be correlated to one or more of the type of material being excavated, the time of day, the operator of the machine, etc. Such notifications may be useful for interpretive analysis, such as providing an assistive input to a system for automatically detecting changes in the properties of the excavated material.

The output may include an alert. For example, an alert may be output when a ground engaging tool 20 loss event is detected. A user interface may be provided. The alert may be presented to an operator of the working equipment 30 on such a user interface. The output may also be provided to other systems of the working equipment including, for example, control systems of the working equipment 30. Examples of how alerts maybe provided to the operator include, but are not limited to, one or more of an audio alert, a visual alert, and a haptic feedback alert. The alerts preferably distinguish between wear and loss events. The output also preferably informs an operator which portion of a ground engaging tool 20 is identified as being lost or worn. Such information is preferably also available via an application programming interface and/or digital output for consumption by other systems, such as a control system or remote operations.

A vehicle identification system may be provided, preferably a Radio Frequency Identification (RFID) based system or Global Positioning System (GPS) or fleet management system (FMS) which may use a mix of methods such as, for example, a truck-based FMS. With such a vehicle identification system an associated vehicle, such as a haulage vehicle receiving material from the working equipment 20, can be identified. When a ground engaging tool 20 loss event occurs the vehicle identification system may be utilised to identify a vehicle that most likely contains the lost portion of the ground engaging tool 20.

The processor 60 may also be configured to provide historical tracking. Such historical tracking may allow an operator to view difference image information, three dimensional models, data or images from the sensors 50 themselves (if applicable, depending on the sensing modality) and/or images from adjacent sensors (such as a thermal camera) to assist the operator in identifying the current state of the ground engaging tool 20 and/or historical state changes. Such historical tracking may be utilised to review a loss event, whereby manual historical review could be used to supplement any delays in detection by the system. For example, a lower false alarm rate may be achieved by increasing an averaging window and comparison periods, at the expense of a possibly larger delay between a ground engaging tool 20 loss event actually occurring and being identified by the system.

The processor may also be configured to transmit data. The data is preferably transmitted to a remote location. Such data may include one or more of three dimensional representations of the ground engaging tool 20, difference image information, and alerts. Such data is preferably sent from the working equipment 20 to a remote server or cloud environment for additional processing, analysis, tracking and/or reporting. The remote server or cloud environment may supplement a local processor of the working equipment or even carry out some of the processing instead of a local processor on the working equipment. Examples of some metrics which could be derived from such information include wear rates and ground engaging tool 20 life estimation. Such information could be supplemented with information from other sources such as, for example, specific dig energy and economic constraints or variables, ground engaging tool part prices to allow for recommendations on ground engaging tool 20 change-out periods, or tied-in as an input to other systems such as, for example, automated ground engaging tool 20 ordering systems. The processor may be configured to receive an input from an operator of the working equipment indicating that a wear or loss event has occurred. Upon receiving such an input analysis may be conducted and/or a notification sent remotely. The notification may be used to alert maintenance to the working equipment. Such an 'on demand' approach may mean the tool of the working equipment can have larger maintenance inspection intervals.

In addition to wear or loss being determined, the processor may be configured to determine when a wear member is replaced by looking for positive, rather than negative, changes in the difference image. Such information can be used to determine wear part life and/or replacement patterns. An analysis of the difference image may also be utilised to recognise the shape of the wear part. This may be used to identify the wear part in use to determine operator preferences and/or activities. A suitability analysis may be conducted in which wear and/or loss characteristics of identified wear members can be determined. Recommendations of specific replacement wear members can be provided after such a suitability analysis determination.

Figure 6 illustrates a diagrammatic representation of an example a wear member monitoring system having sensors 500, a processor 600 and an output 700. The processor 600 is configured to: receive data relating to relating to the ground engaging tool 20 from the one or more sensors at step 610, generate a three dimensional representation of at least a portion of the ground engaging tool using the received data at step 620, compare the generated three dimensional representation with a previously generated three dimensional representation 630 at step 640; identify one or more of wear and loss of at least a portion of the ground engaging tool using the comparison of the generated three dimensional representation with the previously generated three dimensional representation at step 650; and when wear or loss of at least a portion of the ground engaging tool is identified, output 700 an indication of that wear or loss at step 660.

Advantageously, the invention provides a monitoring system 10, and associated method, for identifying lost and worn wear members of a ground engaging tool 20. This can increase productivity as digging with damaged ground engaging tools 20, such as those having worn or detached wear members, is inherently less effective. Furthermore, identifying when a ground engaging tool 20 has a loss event allows for quick recovery of the loss avoiding other potential problems on a worksite such as damage to downstream equipment.

The monitoring system 10 also allows for a preventative maintenance regime such that wear members of a ground engaging tool 20 can be monitored and replaced when they reach a predetermined worn state in order to avoid unscheduled downtime.

Preferably, a three dimensional representation of the ground engaging tool 20 can be created and registered in a consistent frame of reference. Advantageously, the algorithm can be independent to the sensing modality used to create the representation. Noise can be reduced in the three dimensional representation by combining multiple models over short time intervals. Two three dimensional representations, collected at different points of time via a relatively computationally modest subtraction operation (such as, for example, range image subtraction) can highlight differences in the state of the ground engaging tool 20 over a period of time between collection of the respective sets of data. Repeating this over varying time scales can be used to detect different scales of wear and to obtain different levels of responsiveness to gross changes (such as, for example, a loss event).

It should be appreciated that the system and method can be applied to any ground engaging tool 20 such as, for example, monitoring wear parts on buckets, on backhoe, face shovel, wheel loader, bucket wheel excavator, and drilling rigs.

Depending on implementation, minimal, if any, prior knowledge of the ground engaging tool 20 geometry is required. Output can be in a relatively simple format (such as, for example, a range image of differences) that can be interrogated via standard image processing techniques to obtain a large amount of knowledge of the state of the ground engaging tool 20 compared to, for example, comparatively rudimentary linear measurements of a tooth length. The output can also be readily combined with other data sources to significantly increase the utility of the measurement for deeper insights of the ground engaging tool 20. The system and method are reliable having low, and typically easily tuneable, false alarm rates. The output can also be in a format readily suitable for operator alert and off-board monitoring and/or dashboarding.

In this specification, adjectives such as first and second, left and right, top and bottom, and the like may be used solely to distinguish one element or action from another element or action without necessarily requiring or implying any actual such relationship or order. Where the context permits, reference to an integer or a component or step (or the like) is not to be interpreted as being limited to only one of that integer, component, or step, but rather could be one or more of that integer, component, or step etc.

The above description of various embodiments of the present invention is provided for purposes of description to one of ordinary skill in the related art. It is not intended to be exhaustive or to limit the invention to a single disclosed embodiment. As mentioned above, numerous alternatives and variations to the present invention will be apparent to those skilled in the art of the above teaching. Accordingly, while some alternative embodiments have been discussed specifically, other embodiments will be apparent or relatively easily developed by those of ordinary skill in the art.

In this specification, the terms 'comprises', 'comprising', 'includes', 'including', or similar terms are intended to mean a non-exclusive inclusion, such that a method, system or apparatus that comprises a list of elements does not include those elements solely, but may well include other elements not listed.

## Claims

1. A monitoring system (10) for a tool (20) of working equipment (30), the system (10) including:
one or more sensors (50) mounted on the working equipment (30) and directed towards the tool (20); and
a processor (60) configured to:
receive data relating to the tool (20) from the one or more sensors (50);
generate a three dimensional representation of at least a portion of the tool (20) using the received data;
compare the generated three dimensional representation with a previously generated three dimensional representation; and
identify one or more of wear and loss of at least a portion of the tool using the comparison of the generated three dimensional representation with the previously generated three dimensional representation;
**characterised in that** said generation of the three dimensional representation of at least a portion of the tool (20) comprises assembling a plurality of two dimensional scans taken over a time period by using motion estimate data, wherein the motion estimate data is derived from the data received from one or more of the sensors (50) as the tool (20) moves through a field of view of said one or more of the sensors (50).

2. The monitoring system (10) of claim 1, wherein the one or more sensors (50) comprise a two dimensional sensor providing sufficient two dimensional data to infer the three dimensional surface shape of the tool (20).

3. The monitoring system (10) of any one of claims 1 or 2, **characterised in that** one or more of the sensors (50) are located on the working equipment (30) such that they have line of sight of the tool (10).

4. The monitoring system (10) of any one of claims 1 to 3, wherein the processor (60) is further configured to convert the generated three dimensional representation to two dimensional range data.

5. The monitoring system (10) of claim 4, wherein the processor (60) is further configured to compare the generated three dimensional representation with a previously generated three dimensional representation by comparing the two dimensional range data.

6. The monitoring system (10) of claim 4 or 5, wherein the processor (60) is further configured to identify one or more of wear and loss of at least a portion of the tool (20) by analysing a comparison of two dimensional images that include the two dimensional range data.

7. The monitoring system (10) of claim 6, wherein the analysing comprises creating a difference image divided into separate regions that correspond to areas of interest of the tool (20).

8. The monitoring system (10) of claim 7, wherein the difference image is divided into separate regions based upon a predetermined geometric model of the tool (20) and/or edge-detection analysis.

9. The monitoring system (10) of any one of claims 5 to 8, wherein the analysing comprises measuring changes in the difference image in each region by quantifying pixels and/or applying an image convolution process.

10. The monitoring system (10) of any one of claims 5 to 8, wherein the analysing comprises noise rejection using an image mask that prevents analysis of portion of the image deemed to be irrelevant.

11. The monitoring system (10) of any one of claims 1 to 10, wherein the processor (60) is further configured to record and/or transmit global navigation satellite system (GNSS) co-ordinates when loss of at least a portion of the tool (20) is identified.

12. The monitoring system (10) of any one of claims 1 to 11, wherein the processor (60) is further configured to generate the three dimensional representation by aligning multiple three dimensional models by co-locating the three dimensional models in a common frame of reference.

## Patentansprüche

1. Ein Überwachungssystem (10) für ein Werkzeug (20) einer Arbeitsvorrichtung (30), wobei das System (10) Folgendes einschließt:
einen oder mehrere Sensoren (50), die an der Arbeitsvorrichtung (30) montiert und zum Werkzeug (20) ausgerichtet sind; und
einen Prozessor (60), der dazu ausgelegt ist:
Daten in Bezug auf das Werkzeug (20) von dem einen oder den mehreren Sensoren (50) zu empfangen;
eine dreidimensionale Darstellung zumindest eines Abschnitts des Werkzeugs (20) unter Verwendung der empfangenen Daten zu erzeugen;
die erzeugte dreidimensionale Darstellung mit einer zuvor erzeugten dreidimensionalen Darstellung zu vergleichen; und
einen oder mehrere Fälle von Verschleiß und Verlust zumindest eines Abschnitts des Werkzeugs unter Verwendung des Vergleichs der erzeugten dreidimensionalen Darstellung mit der zuvor erstellten dreidimensionalen Darstellung zu erkennen;
**dadurch gekennzeichnet, dass** besagtes Erzeugen der dreidimensionalen Darstellung zumindest eines Abschnitts des Werkzeugs (20) das Zusammenfügen einer Vielzahl von zweidimensionalen Scans umfasst, die unter Verwendung von Bewegungsschätzungsdaten über einen Zeitraum aufgenommen wurden, worin die Bewegungsschätzungsdaten aus den Daten abgeleitet werden, die von einem oder mehreren der Sensoren (50) empfangen werden, wenn sich das Werkzeug (20) durch ein Sichtfeld des besagten einen oder der besagten mehreren Sensoren (50) bewegt.

2. Das Überwachungssystem (10) aus Anspruch 1, worin der eine oder die mehreren Sensoren (50) einen zweidimensionalen Sensor umfassen, der ausreichende zweidimensionale Daten bereitstellt, um die dreidimensionale Oberflächenform des Werkzeugs (20) zu schlussfolgern.

3. Das Überwachungssystem (10) aus einem der Ansprüche 1 oder 2, **dadurch gekennzeichnet, dass** einer oder mehrere der Sensoren (50) so an der Arbeitsvorrichtung (30) angeordnet sind, dass sie Sichtverbindung mit dem Werkzeug (10) haben.

4. Das Überwachungssystem (10) aus einem der Ansprüche 1 bis 3, worin der Prozessor (60) des Weiteren dazu ausgelegt ist, die erzeugte dreidimensionale Darstellung zu zweidimensionalen Bereichsdaten umzuwandeln.

5. Das Überwachungssystem (10) aus Anspruch 4, worin der Prozessor (60) des Weiteren dazu ausgelegt ist, die erzeugte dreidimensionale Darstellung mit einer zuvor erzeugten dreidimensionalen Darstellung durch Vergleich der zweidimensionalen Bereichsdaten zu vergleichen.

6. Das Überwachungssystem (10) aus Anspruch 4 oder 5, worin der Prozessor (60) des Weiteren dazu ausgelegt ist, einen oder mehrere Fälle von Verschleiß oder Verlust zumindest eines Abschnitts des Werkzeugs (20) durch Analyse eines Vergleichs der zweidimensionalen Bilder, die die zweidimensionalen Bereichsdaten einschließen, zu erkennen.

7. Das Überwachungssystem (10) aus Anspruch 6, worin die Analyse die Erstellung eines Differenzbildes umfasst, das in separate Bereiche unterteilt ist, die den interessierenden Bereichen des Werkzeugs (20) entsprechen.

8. Das Überwachungssystem (10) aus Anspruch 7, worin das Differenzbild basierend auf einem vorbestimmten geometrischen Modell des Werkzeugs (20) und/oder einer Kantenerkennungsanalyse in separate Bereiche unterteilt wird.

9. Das Überwachungssystem (10) aus einem der Ansprüche 5 bis 8, worin die Analyse das Messen von Änderungen im Differenzbild in jedem Bereich durch Quantifizieren von Pixeln und/oder Anwenden eines Bildfaltungsverfahrens umfasst.

10. Das Überwachungssystem (10) aus einem der Ansprüche 5 bis 8, worin die Analyse eine Rauschunterdrückung unter Verwendung einer Bildmaske umfasst, die die Analyse eines Bildbereichs, der als irrelevant erachtet wird, verhindert.

11. Das Überwachungssystem (10) aus einem der Ansprüche 1 bis 10, worin der Prozessor (60) des Weiteren dazu ausgelegt ist, Koordinaten des globalen Navigationssatellitensystems (GNSS) aufzuzeichnen und/oder zu übertragen, wenn ein Verlust zumindest eines Bereichs des Werkzeugs (20) erkannt wird.

12. Das Überwachungssystem (10) aus einem der Ansprüche 1 bis 11, worin der Prozessor (60) des Weiteren dazu ausgelegt ist, die dreidimensionale Darstellung zu erzeugen, indem er mehrfache dreidimensionale Modelle durch gemeinsame Anordnung der dreidimensionalen Modelle in einem gemeinsamen Referenzrahmen ausrichtet.

## Revendications

1. Système de surveillance (10) pour un outil (20) d'équipement de terrassement (30), le système (10) incluant :
un ou plusieurs capteurs (50) montés sur l'équipement de terrassement (30) et dirigés vers l'outil (20) ; et
un processeur (60) configuré pour :
recevoir des données relatives à l'outil (20) à partir des un ou plusieurs capteurs (50) ;
générer une représentation tridimensionnelle d'au moins une partie de l'outil (20) en utilisant les données reçues ;
comparer la représentation tridimensionnelle générée avec une représentation tridimensionnelle générée précédemment ; et
identifier une ou plusieurs de l'usure et de la perte d'au moins une partie de l'outil en utilisant la comparaison de la représentation tridimensionnelle générée avec la représentation tridimensionnelle générée précédemment ;
**caractérisé en ce que** ladite génération de la représentation tridimensionnelle d'au moins une partie de l'outil (20) comprend l'assemblage d'une pluralité de balayages bidimensionnels pris sur une période de temps en utilisant des données d'estimation de mouvement, dans lequel les données d'estimation de mouvement sont dérivées des données reçues à partir d'un ou plusieurs des capteurs (50) lorsque l'outil (20) se déplace à travers un champ de vision desdits un ou plusieurs des capteurs (50).

2. Système de surveillance (10) selon la revendication 1, dans lequel les un ou plusieurs capteurs (50) comprennent un capteur bidimensionnel fournissant des données bidimensionnelles suffisantes pour déduire la forme de surface tridimensionnelle de l'outil (20).

3. Système de surveillance (10) selon l'une quelconque des revendications 1 ou 2, **caractérisé en ce qu'**un ou plusieurs des capteurs (50) sont situés sur l'équipement de terrassement (30) de sorte qu'ils présentent une ligne de visée de l'outil (10).

4. Système de surveillance (10) selon l'une quelconque des revendications 1 à 3, dans lequel le processeur (60) est en outre configuré pour convertir la représentation tridimensionnelle générée en données de télémétrie bidimensionnelles.

5. Système de surveillance (10) selon la revendication 4, dans lequel le processeur (60) est en outre configuré pour comparer la représentation tridimensionnelle générée à une représentation tridimensionnelle générée précédemment en comparant les données de télémétrie bidimensionnelles.

6. Système de surveillance (10) selon la revendication 4 ou 5, dans lequel le processeur (60) est en outre configuré pour identifier une ou plusieurs parmi l'usure et la perte d'au moins une partie de l'outil (20) en analysant une comparaison d'images bidimensionnelles qui incluent les données de télémétrie bidimensionnelles.

7. Système de surveillance (10) selon la revendication 6, dans lequel l'analyse comprend la création d'une image de différence divisée en régions séparées qui correspondent à des zones d'intérêt de l'outil (20).

8. Système de surveillance (10) selon la revendication 7, dans lequel l'image de différence est divisée en régions séparées sur la base d'un modèle géométrique prédéterminé de l'outil (20) et/ou d'une analyse de détection de bord.

9. Système de surveillance (10) selon l'une quelconque des revendications 5 à 8, dans lequel l'analyse comprend la mesure de changements dans l'image de différence dans chaque région en quantifiant des pixels et/ou en appliquant un processus de convolution d'image.

10. Système de surveillance (10) selon l'une quelconque des revendications 5 à 8, dans lequel l'analyse comprend un rejet de bruit en utilisant un masque d'image qui empêche l'analyse d'une partie de l'image jugée non pertinente.

11. Système de surveillance (10) selon l'une quelconque des revendications 1 à 10, dans lequel le processeur (60) est en outre configuré pour enregistrer et/ou transmettre des coordonnées de système mondial de navigation par satellite (GNSS) lorsque la perte d'au moins une partie de l'outil (20) est identifiée.

12. Système de surveillance (10) selon l'une quelconque des revendications 1 à 11, dans lequel le processeur (60) est en outre configuré pour générer la représentation tridimensionnelle en alignant de multiples modèles tridimensionnels en co-localisant les modèles tridimensionnels dans un cadre de référence commun.
